# EUROPEAN PATENT SPECIFICATION

(11) **EP 3 208 776 B1**
(45) Date of publication and mention of the grant of the patent: **09.04.2025**
(21) Application number: 17156914.8
(22) Date of filing: 20.02.2017
(51) Int. Cl.: G07C 5/08

(54) **VEHICLE UNIT WITH EJECT TRIGGERED DOWNLOAD OF USER DATA**
FAHRZEUGEINHEIT MIT AUSSTOSSAUSGELÖSTEM HERUNTERLADEN VON BENUTZERDATEN
UNITÉ DE VÉHICULE AVEC TÉLÉCHARGEMENT DE DONNÉES UTILISATEUR DÉCLENCHÉ PAR ÉJECTION

(30) Priority: 19.02.2016 SE 1650223
(43) Date of publication of application: 23.08.2017
(73) Proprietor: Stoneridge Electronics AB, 169 73 Solna (SE)
(72) Inventor: WENNERBLOM, Martin, 168 59 Bromma (SE)
(74) Representative: Bergenstråhle & Partners AB

(56) References cited:
- EP-B1- 2 486 549
- US-A1- 2008 251 577
- US-A1- 2013 191 175

## Description

### Technical field

The present invention relates generally to downloading of user data in a vehicle unit.

### Background art

Today, transportation by vehicle requires measurement of parameters and information relating to the driver activities. This is not exclusively done to satisfy regulations regarding road transportation, but also for fleet management to measure and increase performance and efficiency, as well as for the purpose of electronic road tolling, monitoring vehicle or engine performance parameters, monitoring data relevant for special transports e.g. dangerous goods, livestock or refrigerated food etc. Therefore, most vehicles, such as lorry trucks, carry a Vehicle Unit (VU) to measure, store and possible also report the collected data. In this document, the term "Vehicle Unit" shall mean a digital unit capable of gathering information relating to the vehicle. Examples of such information may be a geographical location, driving hours, distance traveled, start time, finish time, rest time, driver name, starting location and finishing location, exhaust measurements, fuel consumption, temperature data from vehicle or cargo sensors, opening and closing of cargo doors or operation of other vehicle systems, e.g. cranes and lifts etc. One example of a VU is a digital tachograph, capable of recording and digitally compiling and storing the vehicle data.

The VU is normally located in the cabin of the vehicle, where the VU is arranged in the instrument board, so that the vehicle operator may operate the VU in adjacency to start or stop of a journey. In order to calculate and estimate the speed and the travel distance, or other parameters for instance as listed above, of the vehicle, the VU is in connectivity to one or more sensors, where the sensors are capable of measuring for instance the motion of the wheels or other parameters.

Legislation stipulates that the vehicle operator, i.e. the driver, owns a driver card which is inserted into the VU in order to record his/her activities during operation of the vehicle. Further, legislation requires that the driver cards are downloaded by the fleet company/fleet management on a regular basis. In order to ensure compliance with EC561/2006, the fleet company needs to have control of the downloads of the driver cards.

In prior art solutions it is known to download driver cards on a regular basis, such as e.g. every 28 days, by connection between the VU and an external server via e.g. a telematics unit having a built-in GSM/GPRS mode which keeps track of when it is time to read out or download the driver card. In other solutions the data stored within the driver card is uploaded or offloaded via a remote downloading device, such as e.g. a "dongle" and further to a remote server by connecting the remote downloading device to the VU or to a separate card reader. Such uploading of data may first be preceded by a check of server data if the driver data is to be downloaded.

However, there is an increasing number of drivers working temporary and/or irregular shifts or periods in multiple vehicles. For example, one driver may be employed by different companies in different countries with varying regularity. It is possible that the driver does not return to the same fleet company for an extended period of time. As a result, the fixed interval of downloading driver cards is not sufficient for ensuring that the fleet company/fleet management is in possession of updated records of all driver activities at any given time.

Document US2008251577 A1 discloses an assembly comprising a tachograph, while document US2013191175 A1 discloses a personnel activity recording terminal.

A drawback with the known art is that the latest activities of the driver during operation of the vehicle will not be downloaded. This has the effect that fleet companies will not be in control of driver data that is up to date. As a result, a further effect may be that the company in question is not able to provide an accurate accounting of the data, which may lead to the required payment of costly penalty charges.

### Summary of invention

It is an object of the invention to address at least some of the limitations, problems and issues outlined above. It is also an object to provide a solution for enabling download of a user data device to a Vehicle Unit, VU, wherein the latest activities of the driver will be downloaded. It may be possible to achieve these objects and others by using a Vehicle Unit, a method, a computer program and a computer program product according to the invention as defined in the attached independent claims.

### Brief description of drawings

The invention is now described, by way of example, with reference to the accompanying drawings, in which:
Fig. 1a shows a perspective view of a Vehicle Unit (VU) comprising card slots.
Fig. 1b is a side view of a vehicle comprising a vehicle unit and/or a vehicle unit downloading system.
Fig. 2a is a flow chart illustrating a procedure in a vehicle unit downloading system.
Fig. 2b is a flow chart illustrating a procedure in a vehicle unit downloading system.
Fig. 2c is a flow chart illustrating a procedure in a vehicle unit downloading system.
Fig. 2d is a flow chart illustrating a procedure in a vehicle unit downloading system.
Fig. 3 illustrates example embodiments of a vehicle unit downloading system.
Fig. 4 shows an illustration of embodiments of a vehicle unit downloading system.
Fig. 5 illustrates a block chart of a signaling scenario involving a Vehicle Unit (VU).

### Description of embodiments

In the following, a detailed description of the invention will be given:

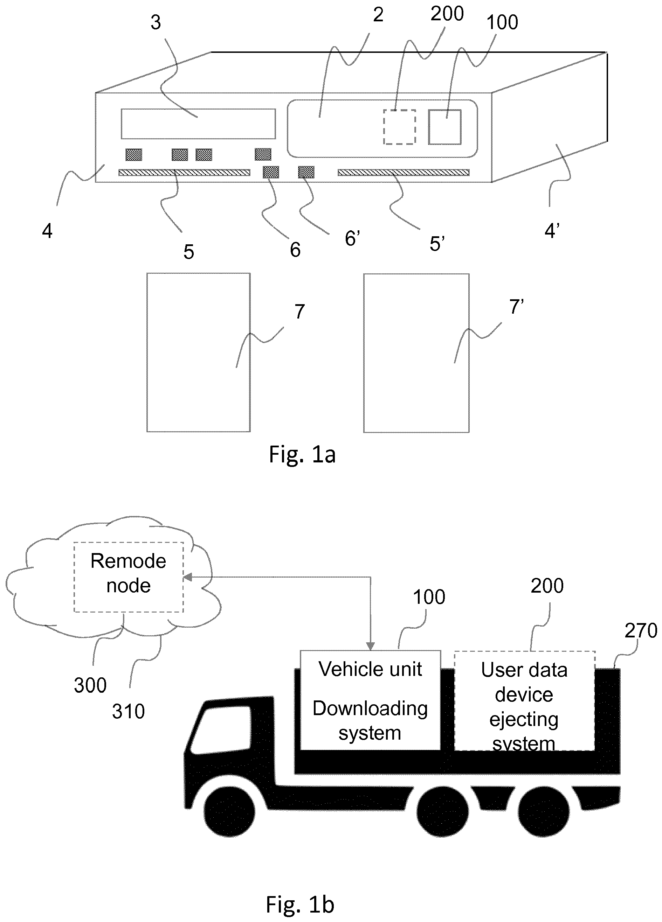

Fig. 1a illustrates a perspective view of a Vehicle Unit, VU, 1, such as e.g. a tachograph 1, for measuring, processing, storing or reporting collected vehicle data. The outer design and form factor of the Vehicle Unit 1 complies with standards in the field of tachographs such as e.g. ISO 7736. The front end 4 of the Vehicle Unit 1 comprises an access panel 2 being in a closed position, i.e. wherein the access panel is closed, thereby covering a space 8 for housing a printer, preferably a removable printer module 8. The Vehicle Unit 1 further comprises a display 3, a first user data device port 5 and a second user data device port 5', and a first side end 4' to disclose the depth of the Vehicle Unit 1 in a direction perpendicular to the front side 4. According to one embodiment, the user data device ports 5, 5' are card slots adapted to receive user data devices 7, 7' adapted to comprise stored user data. A first user data device 7 and a second user data device 7' are further disclosed in Fig. 1a. According to one embodiment, the user data devices 7, 7' are so called driver cards. Eject or release buttons 6, 6' for ejecting/releasing of the respective user data device 7, 7' upon pressing or touching said eject buttons 6, 6' are further shown in Fig. 1a. The Vehicle Unit 1 comprises a vehicle unit downloading system 100 or node for enabling downloading of user data of an external user data device 7, 7'.

Fig. 1b illustrates a side view of a vehicle 270 comprising a Vehicle Unit 1 and/or a vehicle unit downloading node 100. According to one embodiment, the vehicle unit downloading system 100 comprises one of e.g. the following: a digital tachograph, a TEM (Telematics Module), a CEM (Central Electronics Module) or an ECU (Electronic Control Module). According to one embodiment, the vehicle unit 1 further comprises a user data device eject system 200 or node which enables the ejecting of the user data device 7, 7'. Fig. 1b further shows a computer environment 310 comprising a remote node 300.

According to one embodiment, the Vehicle Unit 1 is or comprises a downloading tool, or so called IDE (intelligent dedicated equipment) i.e. adapted to connect remotely to external remote nodes 300, e.g. remote servers. According to one embodiment, a remote node 300 comprises a so called company card or company smart card of a fleet company.

According to one non-claimed embodiment, downloading comprises the process of receiving data from a remote node or system so that data may be further processed, used or stored locally, for instance in a Vehicle Unit 1. According to the invention, downloading comprises the process of downloading data from a user data device, to a Vehicle Unit 1. According to one embodiment, uploading comprises the process of sending or transmitting data to e.g. a remote node 300 or system such as a remote server or any other client, so that the data can be further processed, used, or stored in the remote node or system. According to one embodiment, the data may be uploaded to a remode node 300 or system, such as a remote server or any other client, simultaneously as being downloaded from a user data device without requiring an intermediate storing of the data, e.g. storing in the Vehicle Unit 1.

According to one embodiment, user data comprises user activities carried out during operation of the vehicle, such as e.g. driving or resting time, availability and other work. According to one embodiment, user data comprises user identification data for identifying the driver.

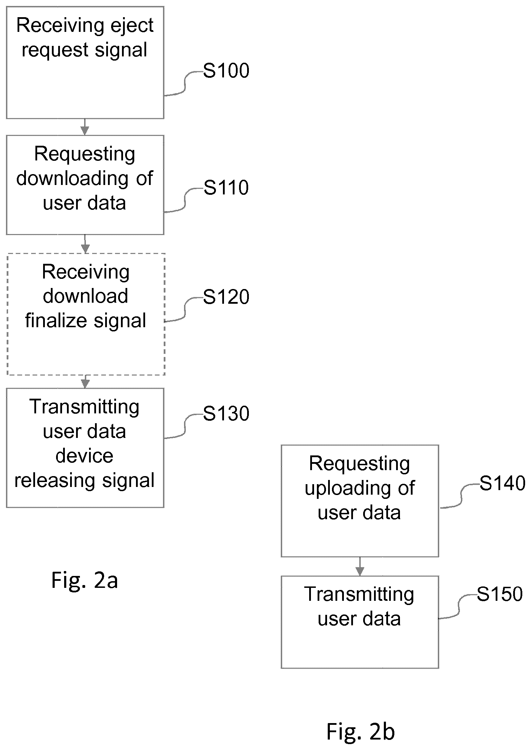

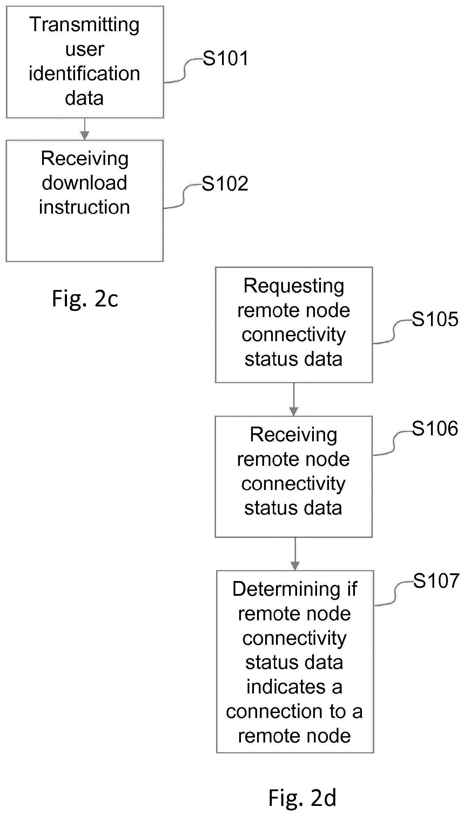

A procedure or method in a vehicle unit downloading system 100 for enabling downloading of the latest user data of a user data device 7, 7', as seen in Fig. 1a, will now be described with reference to Fig. 2a. In a first step S100, an eject request signal is received. According to one embodiment, the eject request signal is generated by an ejecting request by an operator of the vehicle 30 to eject the user data device 7, 7' from the user data device port 5, 5' wherein the user data device 7, 7' is received during operation of the vehicle 270. According to one embodiment, the pressing of an eject button 6, 6' or eject area or release button generates such eject request signal. According to one embodiment, the eject request signal is received from the user data device eject system 200. In a further step S110 the vehicle unit downloading system 100 requests downloading of user data from the user data device 7, 7'. According to one embodiment, the vehicle unit downloading system checks whether the card has been entered in to the user data device port 5, 5' at least a plurality of times within a certain time frame, and wherein the vehicle unit downloading system 100 does not request downloading of user data from the user data device 7, 7' if this is the case. According to one embodiment, the plurality of times is four times during a period of a week or work week or seven days. According to this embodiment, the Vehicle Unit 1 recognizes a user which is an employee and thus a recurring driver and user of the vehicle. In such cases, and upon the setting of the Vehicle Unit 1, the inactivation of the release of the user data device 7, 7' may be removed since the user data will be collected anyway. According to one embodiment the downloaded user data is stored in a memory 150 of the vehicle unit downloading system 100. According to one embodiment, the downloaded user data is stored in a memory 350 of the remote node 300. According to one embodiment, the downloaded user data is stored in the memory 350 of the remote node 300 without being stored in, or stored in an intermediate manner, in the memory 150 of the vehicle unit downloading system 100. According to one embodiment, the downloaded user data is stored in the memory 350 of the remote node 300 without being stored in, or stored in an intermediate manner, in the memory 150 of the vehicle unit downloading system 100, but where user data is stored in an intermediate manner in a separate remote download tool connected to the Vehicle Unit 1. According to one embodiment, in a next possible step S120, the vehicle unit download system receives a download finalized signal when the downloading of the user data of the user date device has been completed. According to one embodiment, the downloading of the user data is completed when the last activity prior to the eject signal is received has been downloaded. In a further step S130, a user data device releasing signal is transmitted to enable an ejecting of the user data device 7, 7'. According to one embodiment, the vehicle unit downloading system 100, or user data device eject system 200 is arranged to prevent release of user data device 7, 7', e.g. by an activated means for preventing release or withdrawal and thus further ejecting the user data device 7, 7', until the user data has been downloaded and a releasing signal enables a release of the user data device 7, 7'. According to one embodiment, the user data device eject system 200 comprises an electrical control means for activating and inactivating the release of use data device 7, 7'. According to one embodiment, a mechanical locking of the user data device 7, 7' is activated or inactivated for preventing and allowing the release of, and further ejecting, the user data device 7, 7' respectively. According to one embodiment, the user data device release signal is transmitted after downloading of the user data. According to one embodiment, the download finalized signal is received before transmitting the user data device releasing signal. According to one embodiment, the user data device release signal is transmitted to a user data device eject system 200 or node which enables the ejecting of the user data device 7, 7'. In a further step S140, as seen in Fig. 2b, the vehicle unit download system requests uploading of user data to a remote node 300. According to one embodiment, the remote node 300 is a remote server or remote back end server. According to one embodiment, the back end server comprises a fleet management system. According to one embodiment, such uploading is carried out when the card is ejected from the user data device port 5, 5'. In a further step, S150, user data is transmitted to the remote node 300. According to one embodiment, the user data is transmitted to the remote node 300 upon establishing a valid connection to the remote node 300. According to one embodiment, a valid connection to a remote node 300, is an existing connection enabling a communication, such as e.g. an uploading of user data, between the vehicle unit downloading system and the remote node 300. According to one embodiment, a valid connection is an existing connection enabling the authentication of a remote node 300 such as company card.

According to one embodiment, in a further intermediate step S101, as seen in Fig. 2c, the vehicle unit downloading system 100 transmits user identification data. According to one embodiment, the user identification data defines the user/operator of the vehicle but also the user data device 7, 7'. According to one embodiment, user data comprises user identification data. According to one embodiment, the user identification data is transmitted to a remote node 300 or server, e.g. a back end server at a fleet company, wherein data concerning the download status of a particular user is stored. In a next step S102, a download instruction is received. According to one embodiment, the download instruction is generated by the remote node 300. The remote node 300 determines whether download of the user data device is required or not, by comparing user identification data received from the vehicle unit download system with stored data concerning the latest downloading date for the particular user and application of predefined rules. According to one embodiment, such stored data is downloading history data. Hence, the download instruction may be an instruction to download the user data of the user data device 7, 7', but may also be to not download the user data of the user data device 7, 7'. According to one embodiment, such predefined rules may be legal rules relating to downloading of user data, e.g. downloading every 28 days. According to one embodiment, predefined rules may define that download should be carried out at more frequent intervals than 28 days, or that downloads should be carried out for all new drivers operating a fleet company's vehicle 270 for the first time. According to one embodiment, steps S101 and S102 are carried out after step S100 and before step S110.

In a further intermediate step, S105, as seen in Fig. 2c, the vehicle unit downloading system 100 requests remote node connectivity status data. According to one embodiment, the request is sent to a vehicle unit internal remote downloading tool (IDE). According to one embodiment, the request is sent to a separate and external remote downloading tool connected to the Vehicle Unit 1. In a next step S106 a remote node connectivity status data is received. In a further step S107, the vehicle unit downloading system 100 determines whether the remote node connectivity status data indicates a connection to a remote node. According to one embodiment, the vehicle unit downloading system 100 determines whether the remote node connectivity status data indicates a valid connection to a remote node. In a further step S110 the vehicle unit downloading system 100 requests downloading of user data from the user data device 7, 7' based on the received remote node connectivity status data. Hence, according to one embodiment, the steps S105-S107 are carried out after step S100. According to the invention, the vehicle unit downloading system 100 requests downloading of user data from the user data device 7, 7' if the remote node connectivity status indicates a non-existing connection to a remote node 300.

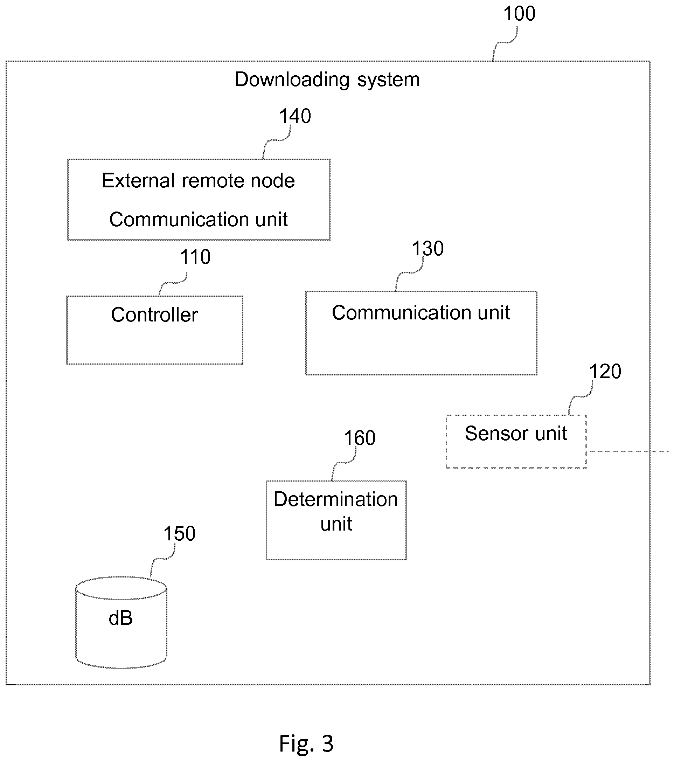

Fig. 3 discloses a vehicle unit downloading system 100 for enabling downloading of user data of an external user data device 7, 7'. The system 100 is arranged to receive an eject request signal by a communication unit 130. The system 100 is further arranged to request downloading of user data from a user data device 7, 7' based on the received eject request signal by a controller 110. According to one embodiment, the downloaded user data is stored in a memory device 150 of the vehicle unit downloading system 100. According to one embodiment, the user data is stored in the memory device 150 as a ddd file format. According to other embodiments, the user data file is in a esm, tgd, add format. The communication unit 130 is arranged to receive a download finalized signal. The communication unit 130 is further arranged to transmit a user data device releasing signal upon receiving the download finalized signal. According to one embodiment, the controller 110 is thereafter arranged to request uploading of user data to a remote node 300. An externa remote node communication unit 140, such as e.g. a communication interface, is arranged to transmit user data to a remote node 300. According to one embodiment, the external remote node communication unit 140 is arranged to transmit user identification data. The external remote node communication unit 140 is thereafter arranged to receive a download instruction. The controller 110 is further arranged to request a remote node connectivity status data. The external remote node communication unit 140 is arranged to receive remote node connectivity status data. According to one embodiment, a determination unit 160 is arranged to determine whether the remote node connectivity status data indicates an existing connection to a remote node 300.

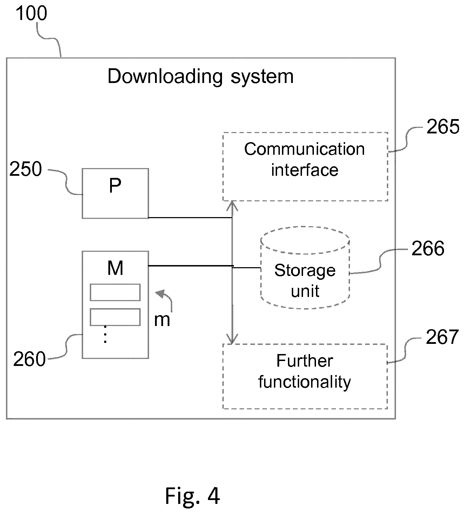

Fig. 4 shows an illustration of embodiments of a vehicle unit downloading system 100. The vehicle unit downloading system 100 may be implemented, by means of program modules of a respective computer program comprising code means which, when run by a processing unit 250 causes the vehicle unit downloading system 100 to perform the above-described actions. The processing unit 250 may comprise a single Central Processing Unit (CPU), or could comprise two or more processing units. For example, the processing unit 250 may include general purpose microprocessors, instruction set processors and/or related chips sets and/or special purpose microprocessors such as Application Specific Integrated Circuits (ASICs). The processing unit 250 may also comprise a storage for caching purposes.

Each computer program may be carried by a computer program product 260 in the vehicle unit downloading system 100, shown in Fig. 1b, 3, 4, 5, et al, in the form of a memory having a computer readable medium and being connected to the processing unit 250. The computer program product 260 or memory thus comprises a computer readable medium on which the computer program is stored e.g. in the form of computer program modules "m". For example, the memory 260 may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the vehicle unit downloading system 100.

The vehicle unit downloading system 100 may further comprise a communication interface 265. The communication interface 265 may be arranged to communicate with for example sensor unit 120 e.g. sensing the presence of a user data device being received in the user data port 5, 5', or the pressing of the eject button 6, 6'. In an embodiment the communication interface 265 may comprise chip set adopted for communication via CAN bus (Controller Area Network) or communication adopted to ISO 11898. Other examples of standards which may be supported by the communication interface 265are: ZigBee, Bluetooth, RFID (Radio frequency identification), USB (Universal serial bus), or IEEE 802.11(Institute of Electrical and Electronics Engineers), including but not limited to 802.11a/b/n or other similar forthcoming standards. The communication interface 265 may comprise an antenna. The communication interface 265 may be connectable to an external antenna. The vehicle unit downloading system 100 may further comprise one or more storage units 266 and further functionality 267 useful for the vehicle unit downloading system 100 to serve its purpose as vehicle unit downloading system, such as power supply, internal communications bus, internal cooling, database engine, operating system, not limiting to other functional ities.

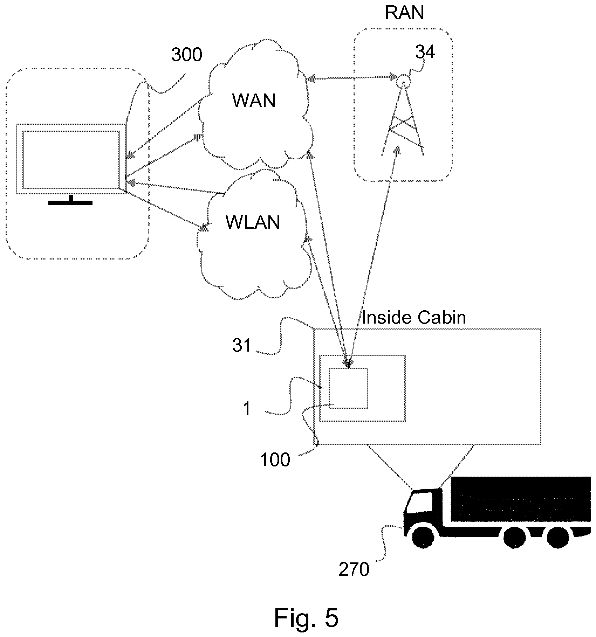

With reference to Fig. 5, a block chart illustrating a signaling scenario involving a VU 1 comprised in a vehicle 30. The VU1, as described, is functioning as an IDE, i.e. at least having a download tool integrated in the tachograph and further comprises means for communicating with remote nodes 300. According to one embodiment, the VU 1 may be capable of communicating using a Radio Access Network, RAN, comprising a Base Station 34. The BS 34 can then communicate, using a Wide Area Network, such as Internet or a private WAN, such as a corporate network, with a remote node 300, e.g. a back end server, which may comprise a fleet management system. The VU 1 may also be adapted to communicate directly with a remote node 300 using a WAN or in certain situations a Wireless Local Area Network, WLAN. The latter may be preferable in a situation wherein the vehicle 30 comprising the VU1 is located or parked close to and using the WLAN of for instance a home office, goods terminal or at a customs station. Then, the VU 1 may provide parts, or all, of the information relating to the operation of the vehicle to a remote node 300. The remote node 300, according to one embodiment comprising a fleet management system may then, based on the provided information, help the vehicle operator to make decisions for a more efficient transportation.

## Claims

1. A Vehicle Unit (1), comprising a user data device port (5, 5') for receiving a user data device (7, 7') comprising user data,
wherein the Vehicle Unit (1) is arranged to determine a remote node connectivity status, wherein the Vehicle Unit (1) is arranged to download user data from the user data device (7, 7') based on an ejecting request to eject the user data device (7, 7') from the user data device port (5, 5') and wherein the Vehicle Unit (1) is further arranged to download user data of the user data device if the remote node connectivity status indicates a non-existing connection to a remote node (300), wherein the Vehicle Unit (1) is further arranged to enable releasing of the user data device (7, 7') after downloading of user data from the user data device (7, 7'), whereby the user data device (7, 7') may be ejected.

2. A Vehicle Unit (1), according to claim 1, wherein the Vehicle Unit (1) is arranged to enable releasing of the user data device (7, 7') after the downloading of user data from the user data device (7, 7') is completed.

3. A Vehicle Unit (1) according to any of the preceding claims, wherein the Vehicle Unit (1) is arranged to upload data to the remote node (300) by transmitting the user data to the remote node (300).

4. A Vehicle Unit (1) according to claim 3, wherein the Vehicle Unit (1) is arranged to download user data from the user data device (7, 7') based on previous downloading history data of the user data device (7, 7') stored in the remote node (300).

5. Method performed by a vehicle unit downloading system (100) of a Vehicle Unit (1) according to claim 1, for enabling downloading of user data of a user data device (7, 7'), the method comprising:
- receiving (S100) an eject request signal,
- requesting (105) remote node connectivity status data,
- receiving (106) the remote node connectivity status data,
- determining (107) whether the remote node connectivity status data indicates a connection to a remote node (300),
- requesting downloading (S110) of user data from the user data device (7, 7'), based on the received remote node connectivity status data, wherein the vehicle unit downloading system (100) requests downloading of user data from the user data device (7, 7') if the remote node connectivity status indicates a non-existing connection to the remote node (300)
- transmitting (S130) a user data device releasing signal for enabling release of the user data device (7, 7') after downloading of the user data, whereby the user data device (7, 7') may be ejected.

6. The method according to claim 5, further comprising:
- requesting (S140) uploading of downloaded user data,
- transmitting (S150) the downloaded user data.

7. The method according to any of the preceding claims 5-6, further comprising:
- transmitting (S101) user identification data,
- receiving (S102) a download instruction.

8. A computer program, comprising computer readable code means, which when run in a connected vehicle unit downloading system (100) arranged to enable downloading of user data of a user data device (7, 7') causes the connected vehicle unit downloading system (100) arranged to enable downloading of user data of a user data device (7, 7') to perform the method according to any of the claims 5-7.

9. A computer program product, comprising a computer readable medium and a computer program according to claim 8, wherein the computer program is stored on the computer readable medium.

## Patentansprüche

1. Fahrzeugeinheit (1), umfassend einen Benutzerdatenvorrichtungsanschluss (5, 5') zum Aufnehmen einer Benutzerdatenvorrichtung (7, 7'), die Benutzerdaten umfasst,
wobei die Fahrzeugeinheit (1) so angeordnet ist, dass sie einen Konnektivitätsstatus eines entfernten Knotens bestimmt, wobei die Fahrzeugeinheit (1) so angeordnet ist, dass sie Benutzerdaten aus der Benutzerdatenvorrichtung (7, 7') basierend auf einer Ausstossanforderung, um die Benutzerdatenvorrichtung (7, 7') aus dem Benutzerdatenvorrichtungsanschluss (5, 5') auszustossen, herunterlädt und wobei die Fahrzeugeinheit (1) weiter so angeordnet ist, dass sie Benutzerdaten aus der Benutzerdatenvorrichtung herunterlädt, wenn der Konnektivitätsstatus eines entfernten Knotens eine nicht vorhandene Verbindung zu einem entfernten Knoten (300) anzeigt,
wobei die Fahrzeugeinheit (1) weiter so angeordnet ist, dass sie Freigeben der Benutzerdatenvorrichtung (7, 7') nach Herunterladen von Benutzerdaten aus der Benutzerdatenvorrichtung (7, 7') ermöglicht, wodurch die Benutzerdatenvorrichtung (7, 7') ausgestossen werden kann.

2. Fahrzeugeinheit (1) nach Anspruch 1, wobei die Fahrzeugeinheit (1) so angeordnet ist, dass sie Freigeben der Benutzerdatenvorrichtung (7, 7') ermöglicht, nachdem Herunterladen von Benutzerdaten aus der Benutzerdatenvorrichtung (7, 7') abgeschlossen ist.

3. Fahrzeugeinheit (1) nach einem der vorstehenden Ansprüche, wobei die Fahrzeugeinheit (1) so angeordnet ist, dass sie durch Übertragen der Benutzerdaten auf den entfernten Knoten (300) Daten auf den entfernten Knoten (300) hochlädt.

4. Fahrzeugeinheit (1) nach Anspruch 3, wobei die Fahrzeugeinheit (1) so angeordnet ist, dass sie Benutzerdaten aus der Benutzerdatenvorrichtung (7, 7') basierend auf vorausgehendem Herunterladen von historischen Daten aus der Benutzerdatenvorrichtung (7, 7'), die im entfernten Knoten (300) gespeichert sind, herunterlädt.

5. Verfahren, das von einem System (100) zum Herunterladen einer Fahrzeugeinheit in einer Fahrzeugeinheit (1) nach Anspruch 1 durchgeführt wird, um Herunterladen von Benutzerdaten aus einer Benutzerdatenvorrichtung (7, 7') zu ermöglichen, wobei das Verfahren Folgendes umfasst:
- Empfangen (S100) eines Ausstossanforderungssignals,
- Abfragen (105) von Konnektivitätsstatusdaten eines entfernten Knotens,
- Empfangen (106) der Konnektivitätsstatusdaten eines entfernten Knotens,
- Bestimmen (107), ob die Konnektivitätsstatusdaten eines entfernten Knotens eine Verbindung zu einem entfernten Knoten (300) anzeigen,
- Anfordern des Herunterladens (S110) von Benutzerdaten aus der Benutzerdatenvorrichtung (7, 7') basierend auf den empfangenen Konnektivitätsstatusdaten eines entfernten Knotens, wobei das System (100) zum Herunterladen einer Fahrzeugeinheit Herunterladen von Benutzerdaten aus der Benutzerdatenvorrichtung (7, 7') anfordert, wenn der Konnektivitätsstatus eines entfernten Knotens eine nicht bestehende Verbindung zu dem entfernten Knoten (300) anzeigt,
- Übertragen (S130) eines Freigabesignals der Benutzerdatenvorrichtung, um Freigeben der Benutzerdatenvorrichtung (7, 7') nach Herunterladen der Benutzerdaten zu ermöglichen, wodurch die Benutzerdatenvorrichtung (7, 7') ausgestossen werden kann.

6. Verfahren nach Anspruch 5, weiter umfassend:
- Anfordern (S140) des Hochladens von heruntergeladenen Benutzerdaten,
- Übertragen (S150) der heruntergeladenen Benutzerdaten.

7. Verfahren nach einem der vorstehenden Ansprüche 5-6, weiter umfassend:
- Übertragen (S101) von Benutzerkenndaten,
- Empfangen (S102) einer heruntergeladenen Anweisung.

8. Computerprogramm, umfassend computerlesbare Codemittel, die, wenn sie auf einem verbundenen System (100) zum Herunterladen einer Fahrzeugeinheit laufen, das so angeordnet ist, dass es Herunterladen von Benutzerdaten aus einer Benutzerdatenvorrichtung (7, 7') ermöglicht, bewirken, dass das verbundene System (100) zum Herunterladen einer Fahrzeugeinheit so angeordnet ist, dass es Herunterladen von Benutzerdaten aus einer Benutzerdatenvorrichtung (7, 7') ermöglicht, um das Verfahren nach einem der Ansprüche 5-7 durchzuführen.

9. Computerprogrammprodukt, umfassend ein computerlesbares Medium und ein Computerprogramm nach Anspruch 8, wobei das Computerprogramm auf dem computerlesbaren Medium gespeichert ist.

## Revendications

1. Unité de véhicule (1), comprenant un port de dispositif de données d'utilisateur (5, 5') pour recevoir un dispositif de données d'utilisateur (7, 7') comprenant des données d'utilisateur,
dans laquelle l'unité de véhicule (1) est agencée pour déterminer un statut de connectivité de nœud distant, dans laquelle l'unité de véhicule (1) est agencée pour télécharger des données d'utilisateur à partir du dispositif de données d'utilisateur (7, 7') sur la base d'une demande d'éjection afin d'éjecter le dispositif de données d'utilisateur (7, 7') du port de dispositif de données d'utilisateur (5, 5') et dans laquelle l'unité de véhicule (1) est en outre agencée pour télécharger des données d'utilisateur du dispositif de données d'utilisateur si le statut de connectivité de nœud distant indique une connexion inexistante à un nœud distant (300), dans laquelle l'unité de véhicule (1) est en outre agencée pour permettre une libération du dispositif de données d'utilisateur (7, 7') après le téléchargement de données d'utilisateur à partir du dispositif de données d'utilisateur (7, 7'), moyennant quoi le dispositif de données d'utilisateur (7, 7') peut être éjecté.

2. Unité de véhicule (1) selon la revendication 1, dans laquelle l'unité de véhicule (1) est agencée pour permettre une libération du dispositif de données d'utilisateur (7, 7') après que le téléchargement de données d'utilisateur à partir du dispositif de données d'utilisateur (7, 7') soit terminé.

3. Unité de véhicule (1) selon l'une quelconque des revendications précédentes, dans laquelle l'unité de véhicule (1) est agencée pour téléverser des données vers le nœud distant (300) en transmettant les données d'utilisateur au nœud distant (300).

4. Unité de véhicule (1) selon la revendication 3, dans laquelle l'unité de véhicule (1) est agencée pour télécharger des données d'utilisateur à partir du dispositif de données d'utilisateur (7, 7') sur la base de données d'historique de téléchargement précédentes du dispositif de données d'utilisateur (7, 7') stockées dans le nœud distant (300).

5. Procédé mis en œuvre par un système de téléchargement d'unité de véhicule (100) d'une unité de véhicule (1) selon la revendication 1, pour permettre le téléchargement de données d'utilisateur d'un dispositif de données d'utilisateur (7, 7'), le procédé comprenant :
- recevoir (S100) un signal de demande d'éjection,
- demander (105) des données de statut de connectivité de nœud distant,
- recevoir (106) les données de statut de connectivité de nœud distant,
- déterminer (107) si les données de statut de connectivité de nœud distant indiquent une connexion à un nœud distant (300),
- demander le téléchargement (S110) de données d'utilisateur à partir du dispositif de données d'utilisateur (7, 7'), sur la base des données de statut de connectivité de nœud distant reçues,
dans lequel le système de téléchargement d'unité de véhicule (100) demande le téléchargement de données d'utilisateur à partir du dispositif de données d'utilisateur (7, 7') si le statut de connectivité de nœud distant indique une connexion inexistante au nœud distant (300)
- transmettre (S130) un signal de libération de dispositif de données d'utilisateur pour permettre une libération du dispositif de données d'utilisateur (7, 7') après le téléchargement des données d'utilisateur, moyennant quoi le dispositif de données d'utilisateur (7, 7') peut être éjecté.

6. Procédé selon la revendication 5, comprenant en outre :
- demander (S140) un téléversement de données d'utilisateur téléchargées,
- transmettre (S150) les données d'utilisateur téléchargées.

7. Procédé selon l'une quelconque des revendications précédentes 5 à 6, comprenant en outre :
- transmettre (S101) des données d'identification d'utilisateur,
- recevoir (S102) une instruction de téléchargement.

8. Programme d'ordinateur, comprenant un moyen de code lisible par ordinateur qui, lorsqu'il est exécuté dans un système de téléchargement d'unité de véhicule connecté (100) agencé pour permettre un téléchargement de données d'utilisateur d'un dispositif de données d'utilisateur (7, 7') amène le système de téléchargement d'unité de véhicule connecté (100) agencé pour permettre le téléchargement de données d'utilisateur d'un dispositif de données d'utilisateur (7, 7') à mettre en œuvre le procédé selon une quelconque des revendications 5 à 7.

9. Produit programme d'ordinateur, comprenant un support lisible par ordinateur et un programme d'ordinateur selon la revendication 8, dans lequel le programme d'ordinateur est stocké sur le support lisible par ordinateur.
